# EUROPEAN PATENT APPLICATION

(11) **EP 4 404 438 A1**
(43) Date of publication of application: **24.07.2024**
(21) Application number: 23218586.8
(22) Date of filing: 20.12.2023
(51) Int. Cl.: H02K 5/173, H02K 21/22, F16C 25/08, F16C 19/06, F16C 19/16, F16C 19/18, F16C 19/22, G01S 17/00, F16C 19/00

(54) **MOTOR ASSEMBLY FOR LIDAR, LIDAR, AND CARRIER SYSTEM**

(30) Priority: 13.01.2023 CN 202320174580 U
(71) Applicant: Innovusion (Ningbo) Co., Ltd., Ningbo, Zhejiang 315048 (CN)
(72) Inventor: HAN, Jie, Zhejiang 315048 (CN); LUO, Siwei, Zhejiang 315048 (CN); ZHAO, Jian, Zhejiang 315048 (CN)
(74) Representative: Sackin, Robert

(57) **Abstract**

Provided are a motor assembly (100) for a LiDAR, a LiDAR, and a carrier system. The motor assembly (100) includes: a stator seat (20) provided with an assembly hole (21); a wound stator (30) fixedly assembled to the stator seat (20); a rotating shaft (40) located in the assembly hole (21) and provided with a shaft shoulder (41); a permanent magnet outer rotor (50) fixedly assembled to the rotating shaft (40); and an upper bearing (61), an elastic member (62), a retaining ring structure and a lower bearing (65) which are arranged in sequence between the rotating shaft (40) and an inner wall of the assembly hole (21) in a gravity direction, wherein the retaining ring structure comprises an inner retaining ring (63) and an outer retaining ring (64), and the elastic member (62) is located between an outer ring of the upper bearing (61) and the outer retaining ring (64) in an axial direction and between the inner retaining ring (63) and the inner wall of the assembly hole (21) in a radial direction; an inner ring of the upper bearing (61), the inner retaining ring (63) and an inner ring of the lower bearing (65) are preloaded and supported on the shaft shoulder (41) and are fixedly assembled to the rotating shaft (40) to rotate along with the rotating shaft (40); and the outer retaining ring (64) and an outer ring of the lower bearing (65) are fixedly assembled to the stator seat (20).

## Description

### TECHNICAL FIELD

The present disclosure relates to the technical field of LiDAR, and in particular, to a motor assembly for a LiDAR, a LiDAR, and a carrier system.

### BACKGROUND

LiDAR is a radar system which measures features of a target, such as position, speed, by transmitting a laser beam. With the continuous development of autonomous driving technology, the LiDAR has remedied the defects of traditional cameras and gradually become one of the most important sensors for autonomous driving or advanced assisted driving.

There are several common types of LiDAR, such as mechanical LiDAR, solid-state LiDAR, and semi-solid-state LiDAR. A rotating mirror LiDAR is a kind of semi-solid-state LiDAR. In the rotating mirror LiDAR, a motor assembly is one of core components thereof, in which a reflecting mirror is provided on a surface of a permanent magnet outer rotor of the motor assembly and reflects a laser beam to a range of influence of the space with the rotation of the permanent magnet outer rotor, so as to achieve comprehensive detection and scanning of the LiDAR.

How to prolong the service life of a bearing in the motor assembly so as to improve the reliability of the motor assembly and prolong the service life of the motor assembly, is a technical problem urgently to be solved by those skilled in the art.

### SUMMARY

Embodiments of the present disclosure provide a motor assembly for a LiDAR, a LiDAR and a carrier system, in order to prolong the service life of a bearing in the motor assembly and thus improve the reliability of the motor assembly and prolong the service life of the motor assembly.

According to an aspect of the present disclosure, provided is a motor assembly for a LiDAR, the motor assembly comprising: a stator seat provided with an assembly hole; a wound stator fixedly assembled to the stator seat; a rotating shaft located in the assembly hole and provided with a shaft shoulder; a permanent magnet outer rotor fixedly assembled to the rotating shaft; and an upper bearing, an elastic member, a retaining ring structure and a lower bearing which are arranged in sequence between the rotating shaft and an inner wall of the assembly hole in a gravity direction, wherein the retaining ring structure comprises an inner retaining ring and an outer retaining ring, and the elastic member is located between an outer ring of the upper bearing and the outer retaining ring in an axial direction and between the inner retaining ring and the inner wall of the assembly hole in a radial direction; an inner ring of the upper bearing, the inner retaining ring and an inner ring of the lower bearing are preloaded and supported on the shaft shoulder and are fixedly assembled to the rotating shaft to rotate along with the rotating shaft; and the outer retaining ring and an outer ring of the lower bearing are fixedly assembled to the stator seat.

According to an aspect of the present disclosure, provided is a LiDAR, comprising the motor assembly in the previous aspect.

According to an aspect of the present disclosure, provided is a carrier system, comprising the LiDAR in the previous aspect.

According to the motor assembly in one or more embodiments of the present disclosure, by means of the preloaded fit between a locking member and the elastic member, the inner ring of the upper bearing is subjected to an oblique upward force from a rolling element, and the inner ring of the lower bearing is subjected to an oblique downward force from a rolling element, such that the forces in the two directions have large arms, and separation distances between the upper bearing and the lower bearing and the center of gravity of the permanent magnet outer rotor can also be appropriately increased by properly adjusting the axial dimension of the retaining ring structure, facilitating the improvement of the stress state of the bearings, improving the shock resistance of the bearings, and thus prolonging the service life of the bearings.

It should be understood that the content described in this section is not intended to identify critical or important features of the embodiments of the present disclosure, and is not used to limit the scope of the present disclosure. Other features of the present disclosure will be easily understood through the following description.

### BRIEF DESCRIPTION OF THE DRAWINGS

More details, features, and advantages of the present disclosure are disclosed in the following description of exemplary embodiments with reference to the accompany drawings, in which:
FIG. 1 is a schematic diagram of a longitudinal cross section of a motor assembly according to some exemplary embodiments of the present disclosure;
FIG. 2 is a schematic diagram of stress of an upper bearing and a lower bearing of a motor assembly according to some exemplary embodiments of the present disclosure;
FIG. 3 is a schematic diagram of a longitudinal cross section of a motor assembly according to some other exemplary embodiments of the present disclosure; and
FIG. 4 is a schematic diagram of a partial structure in FIG. 3.

List of reference signs:
100 - Motor assembly
10 - Bottom plate
20 - Stator seat
21 - Assembly hole
30 - Winding stator
40 - Rotating shaft
41 - Shaft shoulder
50 - Permanent magnet outer rotor
61 - Upper bearing
62 - Elastic member
63 - Inner retaining ring
64 - Outer retaining ring
65 - Lower bearing
66 - Locking member
22 - Retaining shoulder
23 - First adhesive groove
24 - Second adhesive groove
67 - Shaft coupling flange
51 - Reflecting mirror

### DETAILED DESCRIPTION OF EMBODIMENTS

Only some exemplary embodiments are briefly described below. As can be appreciated by those skilled in the art, the described embodiments can be modified in various ways without departing from the spirit or scope of the present disclosure. Accordingly, the accompanying drawings and the description are considered as illustrative in nature, and not as restrictive.

When an outer rotor type brushless direct-current motor assembly (hereinafter referred to as a motor assembly) is operating, a position sensor commutates the current of a winding on a wound stator in a certain order according to the change of the position of a permanent magnet outer rotor. That is, the position sensor detects the position of a magnetic pole of the permanent magnet outer rotor relative to the winding, and generates a position sensing signal in a determined position, and after the position sensing signal is processed by a signal conversion circuit, a power switch circuit is controlled to switch the current of the winding according to a certain logical relationship.

As appreciated by the inventors of the present disclosure, the aforementioned motor assembly operates, when being applied to a LiDAR, under harsh environmental conditions. For example, the motor assembly often needs to withstand large vibration shocks and thermal shocks, resulting in that a bearing of the motor assembly is more likely to fail, thereby affecting the reliability and the service life of the motor assembly.

In view of this, the embodiments of the present disclosure provide a motor assembly for a LiDAR, a LiDAR and a carrier system, in order to prolong the service life of a bearing in the motor assembly and thus improve the reliability of the motor assembly and prolong the service life of the motor assembly.

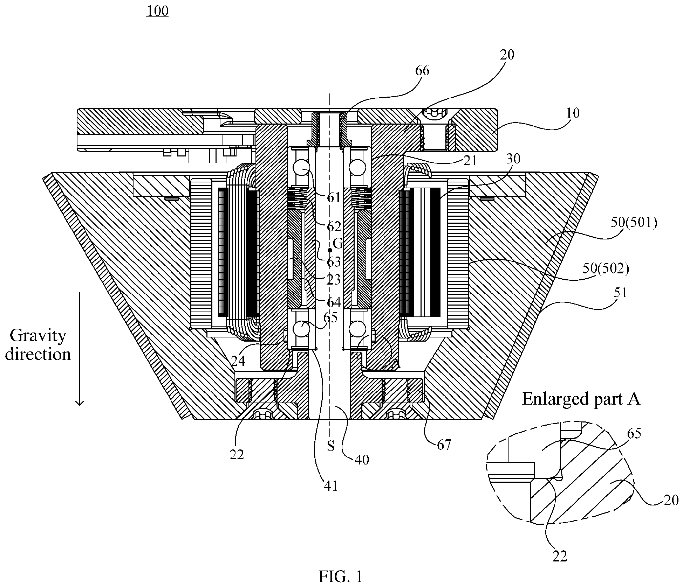

As shown in FIG. 1, in some embodiments of the present disclosure, a motor assembly 100 for a LiDAR is provided. The motor assembly 100 comprises a stator seat 20, a wound stator 30, a rotating shaft 40, a permanent magnet outer rotor 50, an upper bearing 61, an elastic member 62, a retaining ring structure (comprising an inner retaining ring 63 and an outer retaining ring 64), and a lower bearing 65.

In the structure of the motor assembly 100, the stator seat 20 is provided with an assembly hole 21, the wound stator 30 is fixedly assembled to the stator seat 20, the rotating shaft 40 is located in the assembly hole 21 and is provided with a shaft shoulder 41, the permanent magnet outer rotor 50 is fixedly assembled to the rotating shaft 40, and the upper bearing 61, the elastic member 62, the retaining ring structure and the lower bearing 65 are arranged in sequence between the rotating shaft 40 and an inner wall of the assembly hole 21 in a gravity direction.

In the structure of the motor assembly 100, the retaining ring structure comprises the inner retaining ring 63 and the outer retaining ring 64. The elastic member 62 is located between an outer ring of the upper bearing 61 and the outer retaining ring 64 in an axial direction (as the direction of a central axis S shown in FIG. 1), and is located between the inner retaining ring 63 and the inner wall of the assembly hole 21 in a radial direction orthogonal to the central axis S; an inner ring of the upper bearing 61, the inner retaining ring 63 and an inner ring of the lower bearing 65 are preloaded and supported on the shaft shoulder 41 and are fixedly assembled to the rotating shaft 40 to rotate along with the rotating shaft 40; and the outer retaining ring 64 and an outer ring of the lower bearing 65 are fixedly assembled to the stator seat 20.

In the embodiments of the present disclosure, "fixed assembly" between two structures may be a direct fixed assembly, such as fixed assembly implemented by means of interference fit, transition fit, etc. In addition, the "fixed assembly" between the two structures may also be indirect fixed assembly implemented by means of other intermediate members (for example, the fixed assembly implemented by means of an intermediate member such as a screw, a bolt, and a key), which may be determined according to the requirements of an assembly process. The present disclosure does not limit the specific implementation of the "fixed assembly".

In the embodiments of the present disclosure, the motor assembly comprises a locking member 66. The locking member 66 is threadedly coupled to the rotating shaft 40, such that a preload toward the shaft shoulder 41 can be applied to the inner ring of the upper bearing 61, the inner retaining ring 63 and the inner ring of the lower bearing 65 by screwing the locking member 66.

Continuing to refer to FIG. 1, the structure of the permanent magnet outer rotor 50 generally comprises a rotor seat 501 and a permanent magnet 502 fixedly assembled on an inner side the rotor seat. In some embodiments, the motor assembly 100 is a rotating mirror motor assembly, and further comprises a reflecting mirror 51 arranged on a surface of the permanent magnet outer rotor 50. The center of gravity G of the permanent magnet outer rotor 50 (shown only for illustration in FIG. 1) is generally located on the central axis S thereof and lies between the upper bearing 61 and the lower bearing 65.

Referring to FIG. 1, in the embodiments of the present disclosure, the upper bearing 61 and the lower bearing 65 are separated by the retaining ring structure, the inner ring of the upper bearing 61, the inner retaining ring 63 and the inner ring of the lower bearing 65 are fixedly assembled to the rotating shaft 40, the outer retaining ring 64 and the outer ring of the lower bearing 65 are fixedly assembled to the stator seat 20, and the locking member 66 applies the preload toward the shaft shoulder 41 to the inner ring of the upper bearing 61, the inner retaining ring 63 and the inner ring of the lower bearing 65. The elastic member 62 functions to prevent loosening and reduce shocks, and thus needs to have good elasticity, shock resistance and other properties.

The specific type of the elastic member 62 is not limited herein, for example, an elastic washer or a spring may be selected, and a single elastic washer or a combination of a plurality of elastic washers may be used. In some embodiments, the elastic member 62 may also be a single-turn or multiple-turn wave washer (also known as waveform washer).

In the embodiments of the present disclosure, the upper bearing 61 and the lower bearing 65 may each be a ball bearing, such as a deep groove ball bearing. A main structure of the deep groove ball bearing comprises an outer ring, an inner ring, a ball cage and a plurality of balls, and the plurality of balls may be arranged in an encircling manner in a single row or in double rows. In some embodiments, the upper bearing and the lower bearing may also each a cylindrical roller bearing, and the present disclosure does not limit the specific type of the bearings.

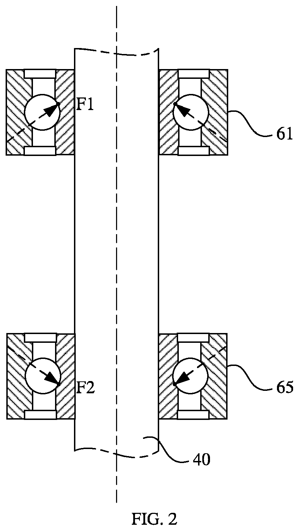

As shown in FIGS. 1 and 2, by means of the structural design of the motor assembly 100 in the embodiments of the present disclosure, when the motor assembly 100 is operating, the outer ring of the upper bearing 61, the outer retaining ring 64 and the outer ring of the lower bearing 65 are stationary, and the inner ring of the upper bearing 61, the inner retaining ring 63 and the inner ring of the lower bearing 65 rotate along with the rotating shaft 40 and the permanent magnet outer rotor 50; by means of preloaded fitting between the locking member 66 and the elastic member 62, the inner ring of the upper bearing 61 is subjected to an oblique upward force F1 from a rolling element (such as balls of the deep groove ball bearing), the inner ring of the lower bearing 65 is subjected to an oblique downward force F2 from a rolling element, and the overall stress of the upper bearing 61 and the lower bearing 65 is roughly in a splayed shape. This design makes arms of the forces in the aforementioned two directions large, and separation distances between the upper bearing 61 and the lower bearing 65 and the center of gravity G of the permanent magnet outer rotor 50 may also be increased by properly adjusting the axial dimension of the retaining ring structure, thereby significantly improving the stress state of the bearings, improving the shock resistance of the bearings, and thus prolonging the service life of the bearings.

Therefore, by using the technical solutions of the embodiments of the present disclosure, the shock resistance of the bearing can be effectively improved, the service life of the bearing can then be prolonged, the reliability of the motor assembly 100 can be improved, and the service life of the motor assembly can thus be prolonged.

As shown in FIG. 1, in some embodiments of the present disclosure, the motor assembly comprises a bottom plate 10, the stator seat 20 is fixedly assembled to the bottom plate 10, and the assembly hole 21 has a retaining shoulder 22 abutting against a lower end surface of the outer ring of the lower bearing 65.

The stator seat 20 is fixedly assembled to the bottom plate 10, and the bottom plate 10 is mounted on a vehicle (such as a vehicle body), such that the stator seat 20 has a high structural strength and can resist large shocks. The retaining shoulder 22 is designed in the assembly hole 21 of the stator seat 20, so that the retaining shoulder 22 can be used to support the lower bearing 65 and thus support the relatively heavy permanent magnet outer rotor 50 in the motor assembly 100 In this way, it is beneficial to further enhance the structural reliability and the shock resistance of the motor assembly 100.

As shown in FIG. 1, in some embodiments of the present disclosure, the permanent magnet outer rotor 50 of the motor assembly 100 is mounted in an inverted manner, and the permanent magnet outer rotor 50 is located below the bottom plate 10. In this way, the shaft shoulder 41 and the retaining shoulder 22 are designed on the same radial plane of the rotating shaft 40, and the locking member 66, the upper bearing 61, the elastic member 62, the retaining ring structure and the lower bearing 65 are arranged in sequence in the gravity direction.

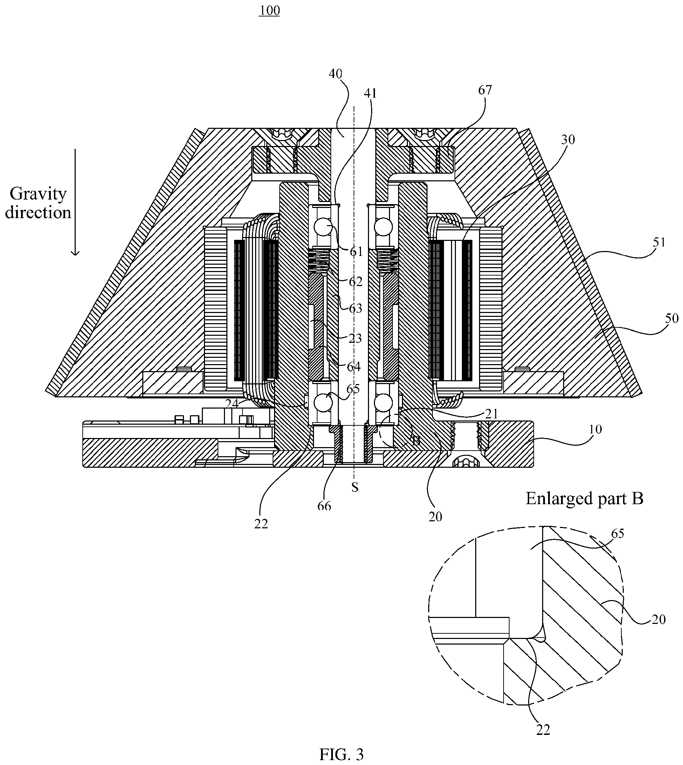

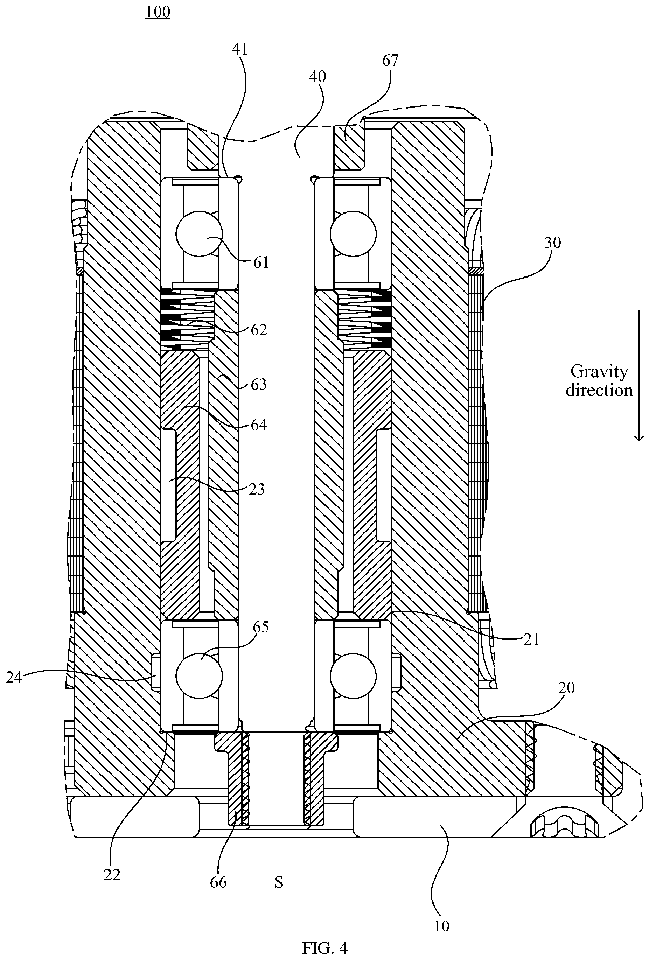

As shown in FIGS. 3 and 4, in some embodiments of the present disclosure, the permanent magnet outer rotor 50 of the motor assembly 100 may also be mounted normally, and the permanent magnet outer rotor 50 is located above the bottom plate 10. In this way, the shaft shoulder 41 is located above the retaining shoulder 22, and the upper bearing 61, the elastic member 62, the retaining ring structure, the lower bearing 65 and the locking member 66 are arranged in sequence in the gravity direction.

Regardless of whether the permanent magnet outer rotor 50 is mounted normally or in an inverted manner, the retaining shoulder 22 is designed to reliably support most of the weight of the motor assembly 100, so that the motor assembly 100 has high structural reliability and shock resistance.

In the mechanical field, fit refers to a relationship between the tolerance zones of a hole and a shaft that are joined with each other and have the same basic size, including interference fit, clearance fit and transition fit. The interference fit depends on an interference value between the shaft and the hole. After assembly, an elastic pressure is generated between surfaces of the parts, thereby achieving secured connection. The interference fit is characterized by good coaxiality and the ability to withstand a large axial force, torque and dynamic load. The clearance fit refers to a fit in which the tolerance zone of the hole is above the tolerance zone of the shaft with a clearance therebetween (including the minimum clearance equal to zero). The clearance fit is mainly used for movable connection between the hole and the shaft. The transition fit refers to a fit in which the tolerance zone of the hole and the tolerance zone of the shaft overlap each other, with a possible clearance or interference therebetween. The transition fit is mainly used for an accurately positioned and detachable connection, and requires better alignment, coaxiality and easy assembly and disassembly of the hole and the shaft.

In some embodiments of the present disclosure, the inner ring of the upper bearing 61, the inner retaining ring 63 and the inner ring of the lower bearing 65 are in a transition fit or an interference fit with the rotating shaft 40, thereby ensuring the coaxiality between these parts.

In some embodiments of the present disclosure, the outer ring of the upper bearing 61, the outer retaining ring 64, the outer ring of the lower bearing 65, and the assembly hole 21 are in a clearance fit, have high positioning accuracy and are easy to assemble and disassemble, and can also resist certain thermal shocks, so that the motor assembly 100 has a reliable structure.

In some embodiments of the present disclosure, as shown in FIGS. 1 and 3, the outer retaining ring 64 is bonded to a wall of the assembly hole 21 by a first adhesive (not shown in the figures), and the wall of the assembly hole 21 or an outer wall of the outer retaining ring 64 is provided with a first adhesive groove 23 for accommodating the first adhesive; and the outer ring of the lower bearing 65 is bonded to the wall of the assembly hole 21 by a second adhesive, and the wall of the assembly hole 21 is provided with a second adhesive groove 24 for accommodating the second adhesive. By means of the bonding effect of the first adhesive, the outer retaining ring 64 can be prevented from rotating in the assembly hole 21, thereby improving the reliability of the fixed assembly of the outer retaining ring 64 and the assembly hole 21. By means of the bonding effect of the second adhesive, the outer ring of the lower bearing 65 can be prevented from rotating in the assembly hole 21, thereby improving the reliability of the fixed assembly of the outer ring of the lower bearing 65 and the assembly hole 21.

In some embodiments of the present disclosure, an outer periphery of the elastic member 62 is in a positioning fit with the assembly hole 21. The outer diameter of the elastic member 62 may be designed on the basis of the diameter of the assembly hole 21, and the outer diameter of the elastic member 62 should be designed to allow a certain amount of axial extension and retraction in the assembly hole 21. In the mechanical field, the positioning fit between parts refers to that the mutual positions between the parts may remain unchanged, and the positioning fit generally does not transfer a load itself nor has the conditions for relative movement.

As shown in FIGS. 1 and 3, in some embodiments, the permanent magnet outer rotor 50 is fixedly assembled to the rotating shaft 40 by a shaft coupling flange 67. The rotating shaft 40 may be assembled in a through hole of the shaft coupling flange 67 in an interference fit, and the permanent magnet outer rotor 50 may be fixedly connected to a flange portion of the shaft coupling flange 67 via a fastener such as a screw, such that the permanent magnet outer rotor 50 and the rotating shaft 40 have a reliable connection structure and are easy to assemble. The present disclosure is not limited to the fixed assembly method of the permanent magnet outer rotor 50 and the rotating shaft 40. For example, in some other embodiments of the present disclosure, the permanent magnet outer rotor 50 and the rotating shaft 40 may also be coupled to each other by a key, etc.

In conclusion, the design of the motor assembly 100 in the above embodiments of the present disclosure can effectively improve the shock resistance of the bearings, thereby prolonging the service life of the bearings, improving the reliability of the motor assembly 100, and thus prolonging the service life thereof.

The embodiments of the present disclosure further provide a motor, which comprises the motor assembly 100 described above, and may further comprise other conventional components such as an enclosure, a fan, and a junction box. Since the motor assembly adopts the design of the above embodiments of the present disclosure, the service life of the motor can be prolonged. By applying the motor in the LiDAR, the shock resistance of the LiDAR can be significantly improved, and the LiDAR can adapt to more harsh environmental conditions.

The embodiments of the present disclosure further provide a LiDAR, comprising the motor assembly 100 of the foregoing embodiments. Since the motor assembly uses the design of the above embodiments of the present disclosure, the service life of the motor assembly is prolonged. Therefore, the shock resistance, the operating performance and the service life of the LiDAR are also improved, and the LiDAR can adapt to the more severe environmental conditions.

A main structure of the LiDAR generally comprises a laser, a receiver, a signal processing unit, and a rotating mechanism. The rotating mechanism may comprise the motor assembly provided in the above embodiments of the present disclosure.

It can be understood that application scenarios of the LiDAR include but are not limited to various carrier systems, roadside detection devices, and other systems with a plurality of sensors that are used for dock monitoring, intersection monitoring, factories, etc. In some examples, the LiDAR may be provided, for example, on either side of a road or at an intersection of the road, so as to obtain road condition images of the road or related images of motor vehicles driving on the road. In some other examples, the LiDAR may be provided, for example, on a carrier system, and a plurality of LiDARs of the LiDAR are provided at different positions of the carrier system, so as to obtain objects in front of, behind or on two sides of the carrier system.

In some examples, the LiDAR may be a rotating mirror LiDAR, and a reflecting mirror is provided on the permanent magnet outer rotor of the motor assembly and driven to rotate by the motor assembly, such that the reflecting mirror can reflect a laser beam to a range of influence of the space.

The embodiments of the present disclosure further provide a carrier system, comprising the LiDAR in the foregoing embodiments.

The carrier system includes, but is not limited to, a vehicle, an aircraft, an unmanned aerial vehicle, a ship, etc. When the LiDAR serves as a vehicle-mounted sensor, the specific type of the vehicle is not limited. For example, the vehicle may be an autonomous vehicle. The specific mounting position of the LiDAR on the vehicle is not limited, for example, it may be mounted to the top or front of the vehicle. On the basis of the aforementioned beneficial effects of the motor assembly in the LiDAR, the driving reliability of the vehicle is also improved accordingly, and the vehicle can adapt to more severe road conditions.

Some exemplary solutions of the present disclosure are described below.

Solution 1. A motor assembly for a LiDAR, the motor assembly comprising:
a stator seat provided with an assembly hole;
a wound stator fixedly assembled to the stator seat;
a rotating shaft located in the assembly hole and provided with a shaft shoulder;
a permanent magnet outer rotor fixedly assembled to the rotating shaft; and
an upper bearing, an elastic member, a retaining ring structure and a lower bearing which are arranged in sequence between the rotating shaft and an inner wall of the assembly hole in a gravity direction, wherein the retaining ring structure comprises an inner retaining ring and an outer retaining ring, and the elastic member is located between an outer ring of the upper bearing and the outer retaining ring in an axial direction and between the inner retaining ring and the inner wall of the assembly hole in a radial direction; an inner ring of the upper bearing, the inner retaining ring and an inner ring of the lower bearing are preloaded and supported on the shaft shoulder and are fixedly assembled to the rotating shaft to rotate along with the rotating shaft; and the outer retaining ring and an outer ring of the lower bearing are fixedly assembled to the stator seat.

Solution 2. The motor assembly according to solution 1, wherein
the motor assembly comprises a locking member, the locking member being threadedly coupled to the rotating shaft and configured to apply a preload toward the shaft shoulder to the inner ring of the upper bearing, the inner retaining ring and the inner ring of the lower bearing.

Solution 3. The motor assembly according to solution 1 or 2, wherein
the assembly hole has a retaining shoulder abutting against a lower end surface of the outer ring of the lower bearing.

Solution 4. The motor assembly according to solution 3, wherein
the motor assembly comprises a bottom plate, the stator seat is fixedly assembled to the bottom plate, the permanent magnet outer rotor is located below the bottom plate, and the shaft shoulder and the retaining shoulder are located on the same radial plane of the rotating shaft; and the locking member, the upper bearing, the elastic member, the retaining ring structure and the lower bearing are arranged in sequence in the gravity direction.

Solution 5. The motor assembly according to solution 3, wherein
the motor assembly comprises a bottom plate, the stator seat is fixedly assembled to the bottom plate, the permanent magnet outer rotor is located above the bottom plate, and the shaft shoulder is located above the retaining shoulder; and the upper bearing, the elastic member, the retaining ring structure, the lower bearing and the locking member are arranged in sequence in the gravity direction.

Solution 6. The motor assembly according to any one of solutions 1 to 5, wherein
the inner ring of the upper bearing, the inner retaining ring and the inner ring of the lower bearing are in a transition fit or an interference fit with the rotating shaft.

Solution 7. The motor assembly according to any one of solutions 1 to 6, wherein
the outer ring of the upper bearing, the outer retaining ring and the outer ring of the lower bearing are in a clearance fit with the assembly hole.

Solution 8. The motor assembly according to solution 7, wherein
the outer retaining ring is bonded to a wall of the assembly hole by a first adhesive, and the wall of the assembly hole or an outer wall of the outer retaining ring is provided with a first adhesive groove for accommodating the first adhesive; and
the outer ring of the lower bearing is bonded to the wall of the assembly hole by a second adhesive, and the wall of the assembly hole is provided with a second adhesive groove for accommodating the second adhesive.

Solution 9. The motor assembly according to any one of solutions 1 to 8, wherein
an outer periphery of the elastic member is in a positioning fit with the assembly hole.

Solution 10. The motor assembly according to any one of solutions 1 to 9, wherein
the permanent magnet outer rotor is fixedly assembled to the rotating shaft by a shaft coupling flange.

Solution 11. The motor assembly according to any one of solutions 1 to 10, wherein
the elastic member comprises an elastic washer or a spring.

Solution 12. The motor assembly according to any one of solutions 1 to 11, wherein
the elastic member comprises a wave washer.

Solution 13. The motor assembly according to any one of solutions 1 to 12, wherein
the upper bearing and the lower bearing are each a ball bearing.

Solution 14. The motor assembly according to any one of solutions 1 to 13, wherein
the motor assembly further comprises a reflecting mirror fixed to a surface of the permanent magnet outer rotor.

Solution 15. A motor, comprising a motor assembly according to any one of solutions 1 to 14.

Solution 16. A LiDAR, comprising a motor assembly according to any one of solutions 1 to 14.

Solution 17. A carrier system, comprising a LiDAR according to solution 16.

It should be understood that, in this description, the orientations or positional relationships or dimensions denoted by the terms, such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial" and "circumferential", are the orientations or positional relationships or dimensions shown on the basis of the drawings, and these terms are used merely for ease of description, rather than indicating or implying that the device or element referred to must have particular orientations and be constructed and operated in the particular orientations, and therefore should not be construed as limiting the scope of protection of the present disclosure.

In addition, the terms "first", "second" and "third" are merely for descriptive purposes and should not be construed as indicating or implying relative importance or implicitly indicating the number of technical features indicated. Thus, the features defined with "first", "second" and "third" may explicitly or implicitly comprise one or more features. In the description of the present disclosure, the term "plurality of" means two or more, unless otherwise explicitly and specifically defined.

In the present disclosure, unless expressly stated or defined otherwise, the terms such as "mounting", "connection", "connected" and "fixing" should be interpreted broadly, for example, either fixed or detachable connection, or integration; may be mechanical connection, or electrical connection, or communication; or may be a direct connection or an indirect connection by means of an intermediate medium, or may be communication between interiors of two elements or interaction between the two elements. For those of ordinary skill in the art, the specific meaning of the above terms in the present disclosure can be understood according to specific circumstances.

In the present disclosure, unless expressly stated or limited otherwise, the expression of the first feature being "above" or "below" the second feature may comprise the case that the first feature is in direct contact with the second feature, and may also comprise the case that the first and second features are not in direct contact but are contacted via another feature therebetween. Furthermore, the first feature being "over", "above" or "on" the second feature comprises the case that the first feature is directly or obliquely above the second feature, or merely indicates that the first feature is at a higher level than the second feature. The first feature being "below", "under" or "beneath" the second feature comprises the case that the first feature is directly or obliquely below the second feature, or merely indicates that the first feature is at a smaller level than the second feature.

This description provides many different embodiments or examples that can be used to implement the present disclosure. It should be understood that these various embodiments or examples are purely illustrative and are not intended to limit the scope of protection of the present disclosure in any way. On the basis of the disclosure of the description of the present disclosure, those skilled in the art will be able to conceive of various changes or substitutions. Any changes or substitutions shall fall within the scope of protection of the present disclosure. Therefore, the scope of protection of the present disclosure shall be subject to the scope of protection of the claims.

## Claims

1. A motor assembly for a LiDAR, the motor assembly comprising:
a stator seat provided with an assembly hole;
a wound stator fixedly assembled to the stator seat;
a rotating shaft located in the assembly hole and provided with a shaft shoulder;
a permanent magnet outer rotor fixedly assembled to the rotating shaft; and
an upper bearing, an elastic member, a retaining ring structure and a lower bearing which are arranged in sequence between the rotating shaft and an inner wall of the assembly hole in a gravity direction, wherein the retaining ring structure comprises an inner retaining ring and an outer retaining ring, and the elastic member is located between an outer ring of the upper bearing and the outer retaining ring in an axial direction and between the inner retaining ring and the inner wall of the assembly hole in a radial direction; an inner ring of the upper bearing, the inner retaining ring and an inner ring of the lower bearing are preloaded and supported on the shaft shoulder and are fixedly assembled to the rotating shaft to rotate along with the rotating shaft; and the outer retaining ring and an outer ring of the lower bearing are fixedly assembled to the stator seat.

2. The motor assembly according to claim 1, wherein
the motor assembly comprises a locking member, the locking member being threadedly coupled to the rotating shaft and configured to apply a preload toward the shaft shoulder to the inner ring of the upper bearing, the inner retaining ring and the inner ring of the lower bearing.

3. The motor assembly according to claim 1 or 2, wherein
the assembly hole has a retaining shoulder abutting against a lower end surface of the outer ring of the lower bearing.

4. The motor assembly according to claim 3, wherein
the motor assembly comprises a bottom plate, the stator seat is fixedly assembled to the bottom plate, the permanent magnet outer rotor is located below the bottom plate, and the shaft shoulder and the retaining shoulder are located on the same radial plane of the rotating shaft; or
the motor assembly comprises a bottom plate, the stator seat is fixedly assembled to the bottom plate, the permanent magnet outer rotor is located above the bottom plate, and the shaft shoulder is located above the retaining shoulder.

5. The motor assembly according to any one of claims 1 to 4, wherein
the inner ring of the upper bearing, the inner retaining ring and the inner ring of the lower bearing are in a transition fit or an interference fit with the rotating shaft.

6. The motor assembly according to any one of claims 1 to 5, wherein
the outer ring of the upper bearing, the outer retaining ring and the outer ring of the lower bearing are in a clearance fit with the assembly hole.

7. The motor assembly according to claim 6, wherein
the outer retaining ring is bonded to a wall of the assembly hole by a first adhesive, and the wall of the assembly hole or an outer wall of the outer retaining ring is provided with a first adhesive groove for accommodating the first adhesive; and
the outer ring of the lower bearing is bonded to the wall of the assembly hole by a second adhesive, and the wall of the assembly hole is provided with a second adhesive groove for accommodating the second adhesive.

8. The motor assembly according to any one of claims 1 to 7, wherein
an outer periphery of the elastic member is in a positioning fit with the assembly hole.

9. The motor assembly according to any one of claims 1 to 8, wherein
the permanent magnet outer rotor is fixedly assembled to the rotating shaft by a shaft coupling flange.

10. The motor assembly according to any one of claims 1 to 9, wherein
the elastic member comprises an elastic washer or a spring.

11. The motor assembly according to claim 10, wherein
the elastic member comprises a wave washer.

12. The motor assembly according to any one of claims 1 to 11, wherein
the upper bearing and the lower bearing are each a ball bearing.

13. The motor assembly according to any one of claims 1 to 12, wherein
the motor assembly further comprises a reflecting mirror fixed to a surface of the permanent magnet outer rotor.

14. A LiDAR, comprising a motor assembly according to any one of claims 1 to 13.

15. A carrier system, comprising a LiDAR according to claim 14.
